# EUROPEAN PATENT APPLICATION

(11) **EP 2 368 611 A2**
(43) Date of publication of application: **28.09.2011**
(21) Application number: 10164650.3
(22) Date of filing: 01.06.2010
(51) Int. Cl.: A63F 13/10, A63F 13/12

(54) **Game server, method of operating the same, and computer-readable recording medium storing online soccer game program**

(30) Priority: 24.03.2010 KR 20100026249
(71) Applicant: Noewiz Games Co., Ltd., 192-2 Gumi-dong, Bundang-gu Seongnam-si, Gyeonggi-do (KR)
(72) Inventor: Im, Woo Jae, Seoul (KR)
(74) Representative: Finnie, Peter John

(57) **Abstract**

Disclosed herein are a game server (100), a method of operating the game server (100), and a computer-readable recording medium storing an online soccer game program. The game server (100) of the present invention includes a uniform card provision unit (130) for providing at least one normal uniform card which can be exchanged for one of a plurality of normal players and at least one tournament-only uniform card which can be exchanged for one of a plurality of tournament-only players, and a player designation unit (140) for, when one of the normal uniform card and the tournament-only uniform card is opened, designating one of players corresponding to the opened normal uniform card or tournament-only uniform card, and providing the designated player to a relevant user terminal device. Accordingly, an online soccer game enabling a game to be conduced by taking on various players and operating various game modes can be provided.

## Description

### BACKGROUND OF THE INVENTION

### 1. Field of the Invention

The present invention relates, in general, to a game server, a method of operating the game server, and a computer-readable recording medium storing an online soccer game program, and, more particularly, to a game server, a method of operating the game server, and a computer-readable recording medium storing an online soccer game program, which provide normal uniform cards corresponding to normal players and tournament-only uniform cards corresponding to tournament-only players.

### 2. Description of the Related Art

With the popularization of personal computers and the Internet, there has also been an increase in online games enabling a plurality of users to access a game server over the Internet and enjoy playing the game. Initial online games are limited to simply-implemented puzzle games or board games, but sports games such as soccer games have recently been provided in the form of online games.

When playing a soccer game provided in the form of an online game, a user conducts the soccer game from the standpoint of a manager or a coach. That is, the user takes on players who will belong to his or her team, and trains the players. When a game is held, the user conducts the game so that his or her team will win by selecting players who will participate in the game and substitute for players and by determining the positions of players participating in the game.

Generally, since game rules and techniques used in actual soccer games are likewise evenly applied even to soccer games provided online, users who like soccer can easily make the adaptation to the online soccer game.

However, an online soccer game is not an actual game which is conducted on the ground, but is only a game conducted by a user from the standpoint of a manager or a coach via the manipulation of a keyboard and a mouse, and thus the user may easily lose interest in the online game. Therefore, an online soccer game requires a method of allowing users to continuously enjoy playing an online soccer game while preventing the users from losing interest in the soccer game.

### SUMMARY OF THE INVENTION

Accordingly, the present invention has been made keeping in mind the above problems occurring in the prior art, and an object of the present invention is to provide a game server, a method of operating the game server, and a computer-readable recording medium storing an online soccer game program, in which a tournament such as the World Cup is held in the form of an online soccer game, normal players are separated from tournament-only players, and respective uniform cards corresponding to the normal players and the tournament-only players are issued.

In accordance with an aspect of the present invention to accomplish the object, there is provided a game server, comprising a uniform card provision unit for providing at least one normal uniform card which can be exchanged for one of a plurality of normal players and at least one tournament-only uniform card which can be exchanged for one of a plurality of tournament-only players, and a player designation unit for, when one of the normal uniform card and the tournament-only uniform card is opened, designating one of players corresponding to the opened normal uniform card or tournament-only uniform card, and providing the designated player to a relevant user terminal device.

In accordance with another aspect of the present invention to accomplish the object, there is provided a method of operating a game server, comprising providing at least one normal uniform card which can be exchanged for one of a plurality of normal players and at least one tournament-only uniform card which can be exchanged for one of a plurality of tournament-only players, and when one of the normal uniform card and the tournament-only uniform card is opened, designating one of players corresponding to the opened normal uniform card or tournament-only uniform card.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a network configuration diagram showing an online game system according to an embodiment of the present invention;
FIG. 2 is a block diagram showing a game server according to an embodiment of the present invention;
FIG. 3 is a diagram showing an icon menu bar including icons required to select functions provided by the game server of FIG. 2;
FIG. 4 is a diagram showing a uniform card management UI provided when a uniform card function is selected from the icon menu bar of FIG. 3;
FIG. 5 is a diagram illustrating the effects of uniform cards according to an embodiment of the present invention; and
FIG. 6 is a flowchart showing a method of operating a game server according to an embodiment of the present invention.

### DESCRIPTION OF THE PREFERRED EMBODIMENTS

Hereinafter, embodiments of the present invention will be described in detail with reference to the attached drawings. The terms and words used in the present specification and claims should not be interpreted as being limited to their typical meaning based on the dictionary definitions thereof, but should be interpreted to have the meaning and concept relevant to the technical spirit of the present invention, on the basis of the principle by which the inventor can suitably define the implications of terms in the way which best describes the invention.

Therefore, the construction described in the present specification and shown in the drawings is only a preferred embodiment of the present invention, and is not intended to represent all the technical spirit of the present invention. Accordingly, it should be understood that various equivalents and modifications capable of replacing the above embodiments may exist at the time at which the present invention is filed.

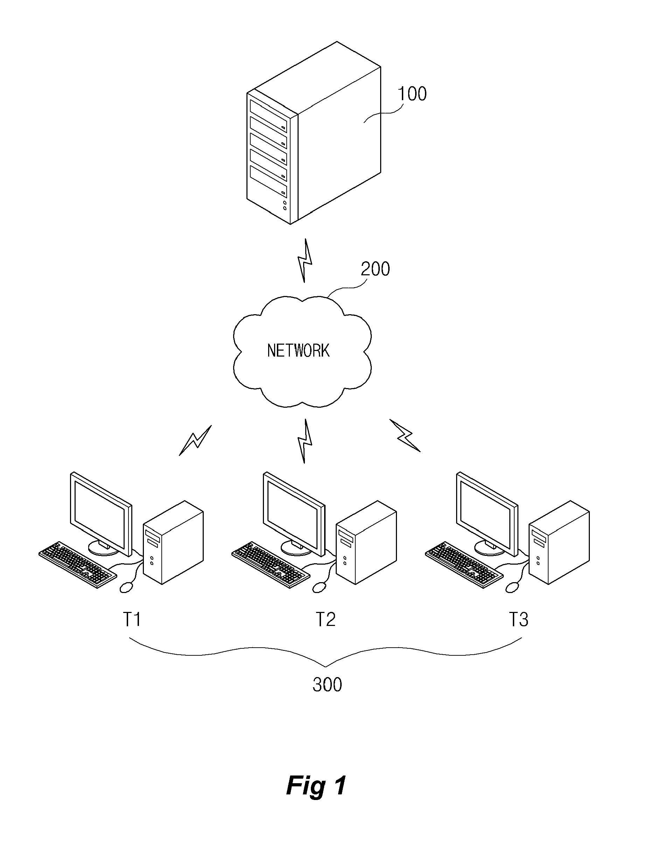

FIG. 1 is a network configuration diagram of an online game system according to an embodiment of the present invention.

Referring to FIG. 1, an online game system according to an embodiment of the present invention includes a game server 100 and a plurality of user terminal devices 300 connected to the game server 100 over a network 200. In this case, the network 200 may include various types of communication networks.

When the user terminal devices 300 access the game server 100 over the network 200, the game server 100 provides online soccer games to the user terminal devices 300 which access the game server 100 over the network 200. Here, the game server 100 may be a server which manages a typical game portal website.

When the user terminal devices 300 are typical computers, the game server 100 provides a webpage required to provide an online soccer game. In this case, the webpage is provided by the game server 100 to interface with the user terminal devices 300 so as to provide an online soccer game. In the present embodiment, the webpage is commonly called a User Interface (UI).

The user terminal devices 300 correspond to terminal devices of users who access the game server 100 over the network 200 and enjoy playing an online soccer game. In FIG. 1, the state in which three terminal devices T1 to T3 are connected to the game server 100 is illustrated. However, it is apparent that the present invention is not necessarily limited to such an embodiment. That is, a large number of user terminal devices 300 may simultaneously access the game server 100 within the allowable limit of the game server 100.

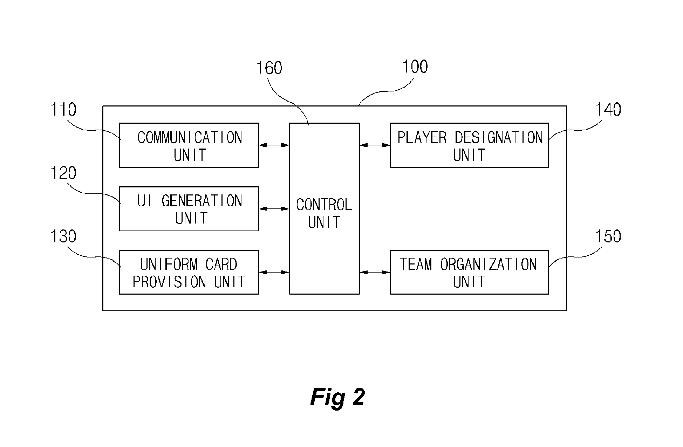

FIG. 2 is a block diagram showing the game server according to an embodiment of the present invention.

Referring to FIG. 2, the game server 100 according to an embodiment of the present invention includes a communication unit 110, a UI generation unit 120, a uniform card provision unit 130, a player designation unit 140, a team organization unit 150, and a control unit 160.

Although not shown in the drawing, the game server 100 includes a database (DB) for storing information related to uniform cards which are items provided to take on players. The uniform card-related information may collectively designate all of the various types of information about uniform cards, such as information about players for whom uniform cards can be exchanged, the amount of money to be paid by a user to the game server 100 when purchasing a uniform card, and growable ability levels of respective players.

The communication unit 110 supports communication between the game server 100 and the user terminal devices 300 over the network 200. In detail, the communication unit 110 receives information which the user terminal devices 300 desire to transmit to the game server 100, and transmits information which the game server 100 desires to provide to the user terminal devices 300.

For example, when the user desires to participate in an online soccer game, he or she must be authenticated as an authentic user by entering an Identification (ID) and a password in most cases. In this case, the user enters his or her ID and password into a login page, provided by the game server 100, by manipulating his or her terminal device 300. The communication unit 110 receives the ID and the password from the user terminal device 300. Thereafter, the game server 100 transmits the results of authentication, obtained using the ID and the password received from the user terminal device 300, to the user terminal device 300 through the communication unit 110.

The UI generation unit 120 generates a UI for interfacing with the user of each user terminal device 300 in the game server 100. In this case, the UI is used as a concept collectively designating all items for allowing the game server 100 to interface with the user terminal device 300. The UI includes webpages, pop-up windows and various menu display windows provided by a typical web server.

The uniform card provision unit 130 provides uniform cards. The uniform cards are a kind of item provided by the game server 100 to take on players who are essential elements when an online soccer game is conducted. Such a uniform card can be provided for free by the game server 100 as a reward for the conduction of an online soccer game when the online soccer game is terminated, or can be purchased by the user after paying a predetermined amount of money to the game server 100.

In the present embodiment, there are two types of uniform cards. One type is a normal uniform card which can be exchanged for one of a plurality of normal players. The other type is a tournament-only uniform card which can be exchanged for one of a plurality of tournament-only players.

Each normal uniform card is a card which can be exchanged for one of a plurality of normal players. When such a normal uniform card is opened according to the user's selection, one of the normal players is designated. In this case, the player designated by opening the normal uniform card may have grown within the range allowed by a first growing ability limit. The first growing ability limit may be a value of 99.

Each tournament-only uniform card is a card which can be exchanged for one of a plurality of tournament-only players. When such a tournament-only uniform card is opened according to the user's selection, one of the tournament-only players is designated. In this case, the tournament-only player designated by opening the tournament-only uniform card may have grown within the range allowed by a second growing ability limit. The second growing ability limit is set to a value greater than the first growing ability limit, and may be a value of 102.

As described above, the normal player taken on by opening the normal uniform card can grow only within the range allowed by the first growing ability limit. In contrast, the tournament-only player taken on by opening the tournament-only uniform card can grow only within the range allowed by the second growing ability limit, and thus the growing ability thereof can grow to be larger than that of the normal player. Further, a normal player can grow at a first growth rate, whereas a tournament-only player can grow at a second growth rate which is higher than the first growth rate.

Consequently, since the tournament-only player can have a greater maximum growth limit than that of the normal player and a higher growth rate than that of the normal player, the tournament-only player can have more excellent performance than that of the normal player.

The uniform card provision unit 130 provides preset uniform cards according to the game mode of an online soccer game using the uniform card-related information stored in the DB. In detail, when the game mode is normal league mode, the uniform card provision unit 130 provides a normal uniform card to the user after a relevant game has been terminated, whereas when the game mode is tournament mode, the uniform card provision unit 130 provides a tournament-only uniform card to the user after a relevant game has been terminated.

The uniform card that is provided by the uniform card provision unit 130 to the user after the game has been terminated does not yet designate a player for whom the uniform card will be exchanged when the uniform card is exchanged for a player.

The uniform card provided by the uniform card provision unit 130 may be opened immediately after being provided according to the selection of the user terminal device 300, or may alternatively be opened when the user needs the uniform card.

When any uniform card provided by the uniform card provision unit 130 is opened, the player designation unit 140 designates one of the players corresponding to the opened uniform card, and provides the designated player to the user terminal device 300.

In more detail, when the uniform card requested to be opened by the user is a normal uniform card, the player designation unit 140 designates one of the normal players, whereas when the uniform card requested to be opened by the user is a tournament-only uniform card, the player designation unit 140 designates one of the tournament-only players.

In the online soccer game, it is preferable that players in the online soccer game correspond to actual professional soccer players to improve the sensation of reality. That is, it is preferable that player images be generated by using the features of the external appearance of actual professional soccer players and that the same names as those of the actual players be used.

Further, all players in the online soccer game have nationalities similarly to the actual soccer players. Accordingly, when a normal uniform card is opened, the player designation unit 140 can designate one of the normal players having nationality preset by the user who opened the normal uniform card. For example, when a country preset by the user is Korea, a normal player for whom the normal uniform card is exchanged may be one of all players having Korea as their nationality, that is, all of players who are active in professional teams in Korea and players who are active in professional teams in foreign countries while having Korea as their nationality.

Generally, when an international soccer tournament such as the World Cup is held, each of countries participating in the World Cup generally selects 23 final entrants. When a tournament-only uniform card is opened, the player designation unit 140 designates tournament-only players corresponding to actual players who actually participate in the World Cup and who are among the final entrants.

The tournament-only players are selected from among the normal players. In consideration of this fact, the players selected from among normal players as the final entrants participating in the World Cup are also classified as tournament-only players in the online soccer game according to the present invention.

Therefore, the tournament-only players designated by the player designation unit 140 depending on the tournament-only uniform cards may overlap with normal players. That is, when there is a normal player named "AAA", the normal player "AAA" and a tournament-only player "AAA" may respectively exist. However, this corresponds to the case where the player "AAA" is one of players selected as the final entrants participating in the World Cup.

When the players designated by a normal uniform card and a tournament-only uniform card currently being opened are a normal player and a tournament-only player who have been previously retained by the user terminal device 300, the player designation unit 140 increases the ability levels of the corresponding players by values corresponding to preset additional points. The reason for this is that, since the same player cannot exist as two persons in one team, the ability level of a corresponding player is intended to be improved when a player the same as the previously retained player is designated by the player designation unit 140.

The team organization unit 150 organizes one of a normal league team and a tournament team so that the team includes players selected by the user terminal device 300 from among the normal players and the tournament-only players, according to the game mode of the online soccer game.

In detail, the team organization unit 150 organizes a normal league team using only normal players when the game mode is normal league mode, and organizes a tournament team using normal players and tournament-only players when the game mode is tournament mode.

In the online soccer game of the present invention, the user of the user terminal device 300 corresponds to a manager. The user corresponding to one user terminal device 300 may create three managers and allow each manger to hold one team. In this case, three managers belong to one user, but teams held by respective managers are regarded as individual teams, and thus the teams may not share any items with one another.

When the team organization unit 150 organizes a tournament team, it performs processing such that when a certain normal player and a certain tournament-only player have the same name, they cannot be present in the same tournament team. That is, when the user desires to dispose a tournament-only player or a normal player having the same name as that of the previously disposed normal player or tournament-only player in the case where players are sequentially disposed in the tournament team by the team organization unit 150, the team organization unit 150 generates a message "the World Cup player and the normal player cannot coexist in the same team" and transmits the message to the user terminal device 300 through the communication unit 110.

For example, when there is a normal player named "AAA", and the player "AAA" is selected as one of the final entrants participating in the World Cup, the normal player named "AAA" and the tournament-only player named "AAA" coexist. However, the normal player named "AAA" and the tournament-only player named "AAA" cannot coexist in the same team. It is only possible for one user to retain both the normal player named "AAA" and the tournament-only player named "AAA".

The control unit 160 controls the entire operation of the game server 100. That is, the control unit 160 controls the input/output of signals among the communication unit 110, the UI generation unit 120, the uniform card provision unit 130, the player designation unit 140 and the team organization unit 150.

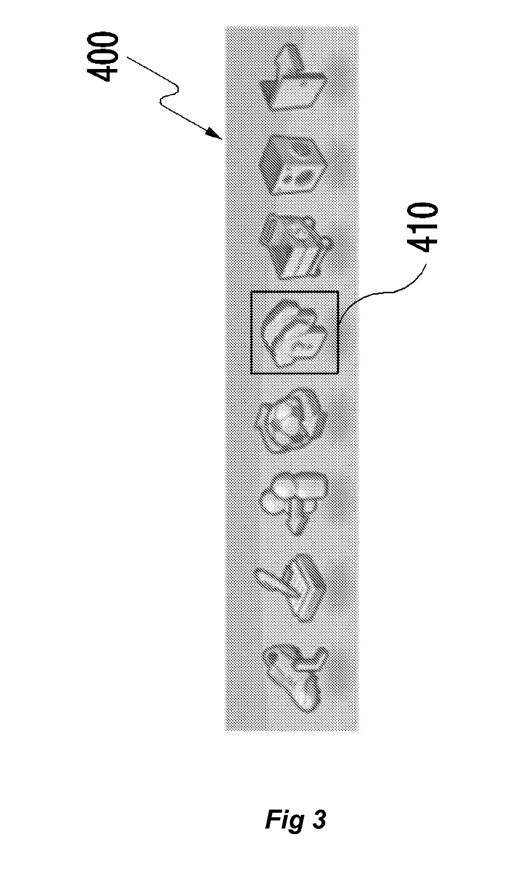

FIG. 3 is a diagram showing an icon menu bar including icons required to select functions provided by the game server of FIG. 2.

As shown in FIG. 3, the game server 100 provides a webpage including various types of menus so that the online soccer game can be enjoyed using the user terminal device 300.

FIG. 3 illustrates an icon menu bar 400 including icons required to select various functions which are used when the user conducts an online soccer game using the user terminal device 30 through the game server 100. In the icon menu bar 400, icons of images corresponding to respective functions are displayed to allow the user to conveniently select functions.

In this case, other icons are required to conduct an online soccer game, but may make the gist of the present invention unclear, and thus only a uniform card icon 410 is described here and description of the remaining icons will be omitted.

The user selects the uniform card icon 410 by manipulating the user terminal device 300, thus managing his or her own uniform cards, that is, normal uniform cards and tournament-only uniform cards.

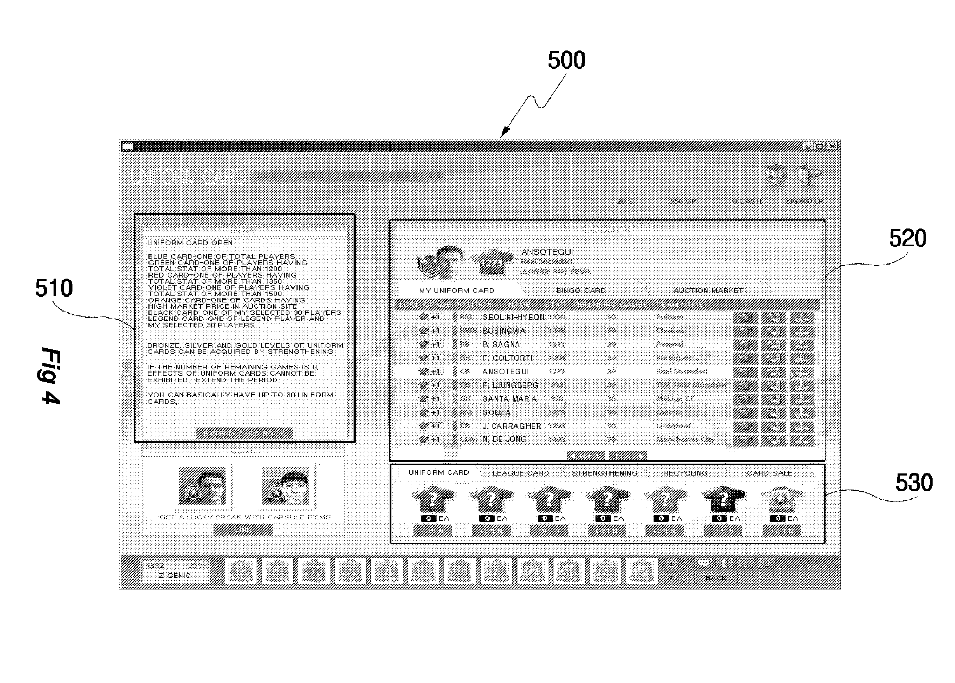

FIG. 4 is a diagram illustrating a uniform card management UI provided when a uniform card function is selected from the icon menu bar of FIG. 3.

When the uniform card icon 410 is selected from the icon menu bar 400 of FIG. 3, a uniform card management UI 500 having the format of FIG. 4 is provided. The uniform card management UI 500 is provided with a description window 510 in which uniform cards are described, a player list display window 520 in which a list of players retained by the user is displayed, and a uniform card display window 530 in which uniform cards retained by the user are displayed.

Normal uniform cards may be implemented as cards of various colors. In this case, players for whom normal uniform cards of respective colors can be exchanged are differently set for respective colors. In the description window 510, a description of players that can be exchanged using normal uniform cards is made.

The user can understand the present state of his or her own players and manage them with reference to the player list display window 520. For example, the user can exchange his or her players back for uniform cards or register the players in a transfer market with reference to the player list display window 520.

In the uniform card display window 530, the user's own uniform cards are displayed. As shown in the drawing, images of uniform cards of respective colors are displayed, and the numbers of uniform cards of respective colors retained by the user are displayed below the uniform card images. In the uniform card display window 530, uniform-shaped images which contain question marks represent normal uniform cards, a nd gold-colored uniform-shaped images which contain stellar patterns represent tournament-only uniform cards.

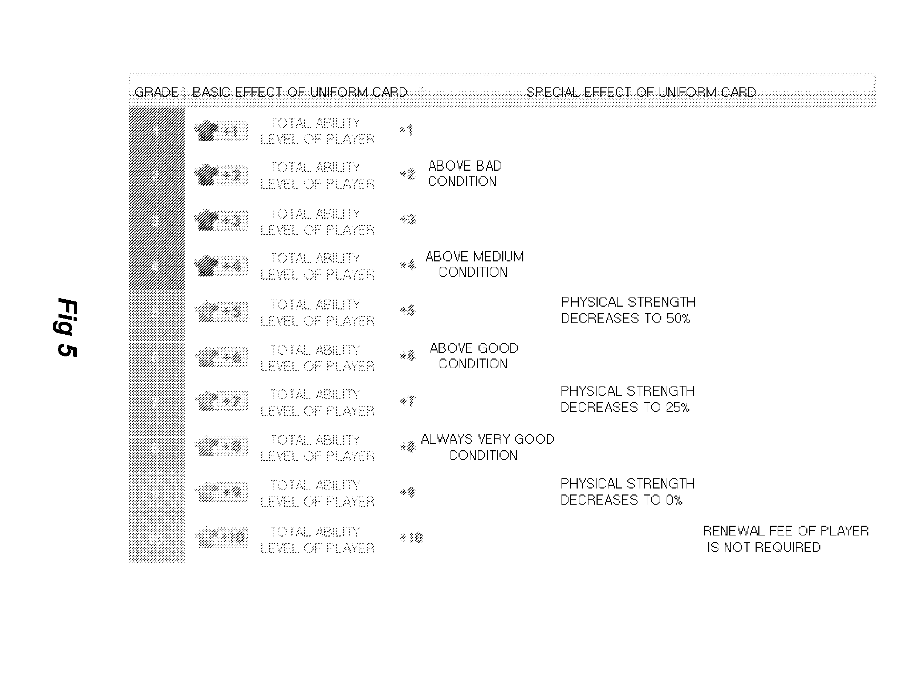

FIG. 5 is a diagram illustrating the effects of uniform cards according to an embodiment of the present invention.

In detail, FIG. 5 illustrates effects the user can obtain when uniform cards are used. As shown in FIG. 4, for normal uniform cards, different functions are set for respective colors. In FIG. 5, effects the user can obtain when normal uniform cards having different functions for respective colors are used are shown.

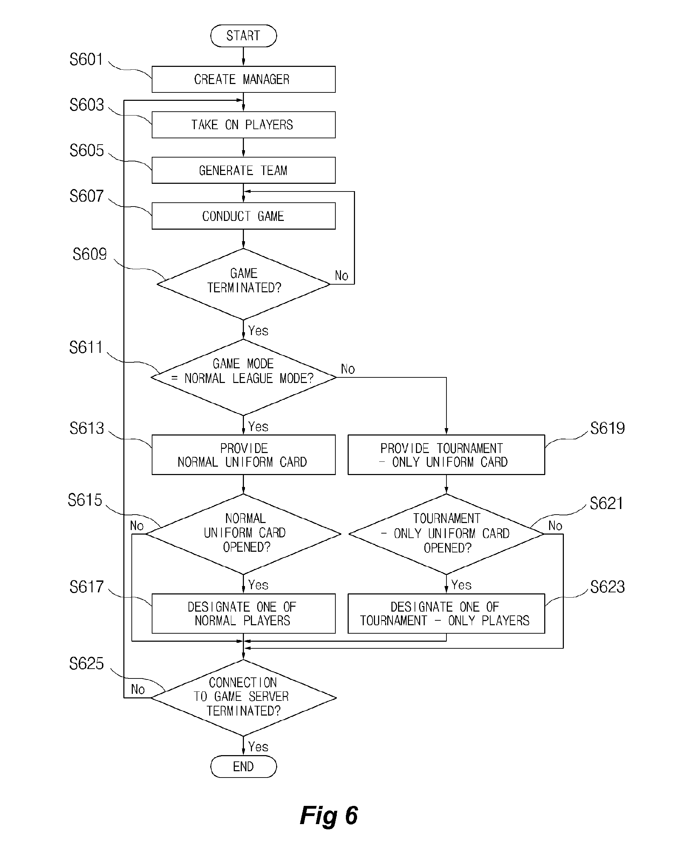

FIG. 6 is a flowchart showing a method of operating the game server according to an embodiment of the present invention.

The method of operating the game server according to the embodiment of the present invention will be described in detail with reference to FIGS. 1 to 6.

When a user desires to access the game server 100 and enjoy playing an online soccer game, he or she creates a manager by manipulating the user terminal device 300 at step S601. In this case, one user can create three managers. The fact that one user can create three managers is only an example, and this can be changed according to the settings of the game server 100.

After creating the manager, the user takes on desired players by manipulating the user terminal device 300 at step S603. In this case, the taking on of players may be performed using one of a method of exchanging a previously retained uniform card for a player when there is the previously retained uniform card, and a method of purchasing a player after paying an amount of money to the game server 100.

The team organization unit 150 organizes a team composed of the user's desired players by the manipulation of the user terminal device 300 at step S605. In the present embodiment, description has been made in the sequence of the manager being created, the players being taken on and the team being organized, but the process of the present invention is not necessarily limited to the sequence of this embodiment. For example, the process may be performed in the sequence of a manager being created, a team being primarily organized, and players being subsequently taken on by the previously organized team.

Thereafter, a game is conducted by the team in which players are taken on according to the number of persons capable of conducting the game at step S607. Here, the conducted game may be in normal league mode or tournament mode, that is, World Cup mode.

When the game conducted at step S607 is terminated at step S609-Y, the control unit 160 determines the mode of the terminated game. When the mode of the game is normal league mode at step S611-Y, the uniform card provision unit 130 provides a normal uniform card to the user terminal device 300 under the control of the control unit 160 at step S613.

The normal uniform card provided to the user terminal device 300 at step S613 may be opened at the time point of the provision or may be opened later by the selection of the user. When the normal uniform card is opened at step S615-Y, the player designation unit 140 designates one of normal players corresponding to the opened normal uniform card at step S617.

When the control unit 160 determines the mode of the game at step S611 and determines that the mode of the game is tournament mode at step S611-N, the uniform card provision unit 130 provides a tournament-only uniform card to the user terminal device 300 under the control of the control unit 160 at step S619.

The tournament-only uniform card provided to the user terminal device 300 at step S619 may be opened at the time point of the provision or may be opened later by the selection of the user. When the tournament-only uniform card is opened at step S621-Y, the player designation unit 140 designates one of tournament-only players corresponding to the opened tournament-only uniform card at step S623.

Thereafter, when the user terminal device 300 terminates connection to the game server 100 at step S625-Y, the current online soccer game is terminated. The above procedure allows the user to enjoy playing an online soccer game which is similar to a real soccer game.

The steps included in the method of operating the game server according to the embodiment of the present invention can be implemented in the form of an online soccer game program. Further, the online soccer game program can be read and interpreted by a computer and can be recorded in recording media which perform an operation in cooperation with the computer.

The recording media of the present invention may include program commands, data files and data structures, which may be designed to comply with the object of the present invention or may be designed using technology known to the field of computer software.

For example, the recording media may integrally represent various storage media configured to store and execute the online soccer game program, such as magnetic media, for example, a hard disk, a floppy disk and magnetic tape, optical media, for example, Compact Disk-Read Only Memory (CD-ROM), a Digital Versatile Disk (DVD), and hardware devices, for example, ROM, Random Access Memory (RAM) and flash memory.

As described above, a game server, a method of operating the game server and a computer-readable recording medium storing an online soccer game program according to the present invention are advantageous in that normal uniform cards which can be exchanged for normal players and tournament-only uniform cards which can be exchanged for tournament-only players are separately provided, thus providing variety to each user at the time of taking on players.

Further, the present invention is advantageous in that various game modes such as normal league mode and tournament mode can be selected, so that the user can participate in a tournament such as the World Cup, and thus can enjoy playing a realistic online soccer game as in the case of an actual game.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A game server (100), the game server (100) allowing a plurality of user terminal devices (300) to access the game server (100) and to provide an online soccer game to the user terminal devices (300), comprising:
a database for storing information related to uniform cards which are items provided to take on players;
a uniform card provision unit (130) for providing at least one normal uniform card which can be exchanged for one of a plurality of normal players and at least one tournament-only uniform card which can be exchanged for one of a plurality of tournament-only players, using the stored uniform card-related information; and
a player designation unit (140) for, when one of the normal uniform card and the tournament-only uniform card is opened, designating one of players corresponding to the opened normal uniform card or tournament-only uniform card, and providing the designated player to a relevant user terminal device.

2. The game server (100) according to claim 1, wherein:
the player designation unit (140) is configured such that,
when the normal uniform card is opened, one of the normal players is designated, and a growth level of the designated normal player is set within a range allowed by a first growing ability limit; and
when the tournament-only uniform card is opened, one of the tournament-only players is designated, and a growth level of the designated tournament-only player is set within a range allowed by a second growing ability limit which is higher than the first growing ability limit.

3. The game server (100) according to claim 1, wherein the uniform card provision unit (130) provides one of the normal uniform card and the tournament-only uniform card according to game mode of the online soccer game.

4. The game server (100) according to claim 3, wherein the uniform card provision unit (130) provides the normal uniform card after a relevant game has been terminated when the game mode is normal league mode, and provides the tournament-only uniform card after the relevant game has been terminated when the game mode is tournament mode.

5. The game server (100) according to claim 1, wherein the player designation unit (140) is configured such that when the player designated by the opened normal uniform card or tournament-only uniform card is a player who has been previously retained by the relevant user terminal device, an ability level of the designated player is increased by a value corresponding to preset additional points.

6. The game server (100) according to claim 1, further comprising a team organization unit (150) for organizing one of a normal league team and a tournament team so that the organized team includes players selected by the relevant user terminal device from among the normal players and the tournament-only players, according to game mode of the online soccer game.

7. The game server (100) according to claim 6, wherein the team organization unit (150) organizes the normal league team using only normal players when the game mode is the normal league mode, and organizes the tournament team using normal players and tournament-only players when the game mode is the tournament mode.

8. The game server (100) according to claim 7, wherein the team organization unit (150) is configured such that when a certain normal player and a certain tournament-only player have an identical name when the tournament team is organized, the normal player and the tournament-only player cannot coexist in one tournament team.

9. A method of operating a game server (100), the game server (100) allowing a plurality of user terminal devices (300) to access the game server (100) and to provide an online soccer game to the user terminal devices (300), comprising:
storing information related to uniform cards which are items provided to take on players;
providing at least one normal uniform card which can be exchanged for one of a plurality of normal players and at least one tournament-only uniform card which can be exchanged for one of a plurality of tournament-only players, using the stored uniform card-related information; and
when one of the normal uniform card and the tournament-only uniform card is opened, designating one of players corresponding to the opened normal uniform card or tournament-only uniform card.

10. The method according to claim 9, wherein the tournament-only uniform card is a World Cup-only uniform card.

11. The method according to claim 10, wherein the tournament-only uniform card is provided to correspond to each of national players of countries participating in the World Cup.

12. The method according to claim 9, wherein the designating is configured such that,
when the normal uniform card is opened, one of the normal players is designated, and a growth level of the designated normal player is set within a range allowed by a first growing ability limit; and
when the tournament-only uniform card is opened, one of the tournament-only players is designated, and a growth level of the designated tournament-only player is set within a range allowed by a second growing ability limit which is higher than the first growing ability limit.

13. The method according to claim 12, wherein the normal player, designated by opening the normal uniform card, grows at a first growth rate, and the tournament-only player, designated by opening the tournament-only uniform card, grows at a second growth rate which is higher than the first growth rate.

14. The method according to claim 9, wherein the providing is configured to provide one of the normal uniform card and the tournament-only uniform card according to game mode of the online soccer game.

15. The method according to claim 14, wherein the providing is configured to provide the normal uniform card after a relevant game has been terminated when the game mode is normal league mode, and provide the tournament-only uniform card after the relevant game has been terminated when the game mode is tournament mode.

16. The method according to claim 9, wherein the designating is configured such that when the player designated by the opened normal uniform card or tournament-only uniform card is a player who has been previously retained by a relevant user terminal device, an ability level of the designated player is increased by a value corresponding to preset additional points.

17. The method according to claim 9, further comprising organizing one of a normal league team and a tournament team so that the organized team includes players selected by a relevant user terminal device from among the normal players and the tournament-only players, according to game mode of the online soccer game.

18. The method according to claim 17, wherein the organizing is configured to organize the normal league team using only normal players when the game mode is the normal league mode, and organize the tournament team using normal players and tournament-only players when the game mode is the tournament mode.

19. The method according to claim 18, wherein the organizing is configured such that when a certain normal player and a certain tournament-only player have an identical name when the tournament team is organized, the normal player and the tournament-only player cannot coexist in one tournament team.

20. A computer-readable recording medium storing an online soccer game program for executing a method comprising:
providing at least one normal uniform card which can be exchanged for one of a plurality of normal players and at least one tournament-only uniform card which can be exchanged for one of a plurality of tournament-only players; and
when one of the normal uniform card and the tournament-only uniform card is opened, designating one of players corresponding to the opened normal uniform card or tournament-only uniform card.
